# EUROPEAN PATENT SPECIFICATION

(11) **EP 4 153 918 B1**
(45) Date of publication and mention of the grant of the patent: **16.04.2025**
(21) Application number: 21734235.1
(22) Date of filing: 21.05.2021
(51) Int. Cl.: F24F 11/46, F24F 11/62, F24F 11/65, F24F 11/66, G05D 23/19

(54) **ELECTRICAL APPARATUS AND METHOD FOR ADAPTIVE CONTROL OF AN ELECTRICAL APPARATUS**
ELEKTRISCHES GERÄT UND VERFAHREN ZUR ADAPTIVEN STEUERUNG EINES ELEKTRISCHEN GERÄTES
APPAREIL ÉLECTRIQUE ET MÉTHODE DE CONTRÔLE ADAPTATIF D'UN APPAREIL ÉLECTRIQUE

(30) Priority: 21.05.2020 IT 202000011809
(43) Date of publication of application: 29.03.2023
(73) Proprietor: De' Longhi Appliances S.r.l. Con Unico Socio, 31100 Treviso (IT); Politecnico Di Torino, 10129 Torino (IT)
(72) Inventor: PERINO, Marco, 10129 Torino (IT); MIRMIRAN, Roshanak, 31100 Treviso (IT); PROSPERI, Francesca, 31100 Treviso (IT); MONTICELLI, Enrica, 31100 Treviso (IT)
(74) Representative: Petraz, Gilberto Luigi
(86) International application number: PCT/IT2021/050156
(87) International publication number: WO 2021/234756

(56) References cited:
- CN-U- 205 825 336
- CN-U- 205 957 398
- US-A1- 2007 241 203
- US-A1- 2016 363 341
- US-A1- 2020 018 506

## Description

### FIELD OF THE INVENTION

The invention concerns an electric air conditioning apparatus (hereafter called "electric apparatus") suitable to modify at least one environmental characteristic of a space and a method for the adaptive control of the electric apparatus, which provides to adapt the functioning of the electric apparatus in relation to the presence and distance of a human subject (hereafter called "subject") in the space considered.

The electric apparatus of the type in question is an air conditioning apparatus suitable to heat, cool and/or dehumidify a space, the functioning of which is useful and/or advantageous in the presence of a person who benefits from it.

### BACKGROUND OF THE INVENTION

Detection devices are known, used to detect the presence of one or more subjects, in particular in indoor or closed spaces, to regulate the functioning of one or more electric apparatuses.

For example, different types of detection means are known, used for the purpose of detecting the presence of a subject:
- infrared (IR) sensors, which can be active or passive (PIR);
- cameras;
- acoustic sensors, such as active ultrasonic sensors, or passive audio acoustic sensors.

Passive infrared sensors are in common use as they are economical and consume little energy. They are classified as pyro-electric or thermophilic sensors. The former require expensive fine-tuning for the static measurement of the temperature, the latter are cheaper and more often used, but are typically only suitable to detect movement. To overcome this limit, a plurality of sensors are used, from two to a matrix of sensors, to also detect the presence of a subject in a stationary situation; with this configuration, moreover, it is also possible to detect a change in position and direction.

It is known that electric apparatuses for moving air or HVAC (Heating, Ventilation and Air Conditioning), such as portable fans, heaters or air conditioners, are typically provided with one or more detection devices able to provide signals to drive the apparatus only when necessary, and to deliver a suitable quantity of air at a suitable temperature.

For example, US 5899807 describes a control device based on infrared technology able to regulate quantity, direction, temperature of an air flow by detecting, or not, the presence of a subject, the proximity between subject and sensor, the position and the level of activity of the subject, detected by means of infrared sensors.

Similarly, US-A-2010/174414 describes a control unit of an air conditioning device provided with an infrared sensor to detect the movement of a subject.

The solution described in US2016/0161141 uses an infrared sensor to measure the temperature of a human body or objects and consequently identify the position of a target subject in order to prevent an uncomfortable cooling for the subject.

A detection device with infrared sensor is also applied in EP-A1460351 in order to detect the temperature of a human body or an object in the space to be conditioned.

As described above, due to the limits given by a single passive infrared sensor, solutions are adopted that use a plurality of them, allowing to observe the presence of a static subject. An example is given in JP-B-2921256.

Active ultrasonic sensors are generally applied to measure the distance between a subject and a detection device. These sensors are insensitive to movement in the orthogonal direction toward the receiver. For this reason, they are typically integrated on a system with different sensors, such as a plurality of infrared sensors. Patent CN-B-104110762 describes the combination of an ultrasonic sensor and an infrared sensor, which allows a more accurate evaluation of the subject's position.

Similarly, more complex integration of the sensors is described in US 5986357, which include infrared technology, acoustic and ultrasonic sensors, microwaves, and photocell monitoring devices.

US2016/363341A1 discloses an occupant-tracking fan apparatus which comprises a moveable support for positioning a source of forced air towards a sensed target.

US2007/241203A1 discloses an HVAC system comprising a remote thermostat and US2020/018506A1 discloses a system and method of detecting occupancy of a conditioned space.

CN205825336U and CN205957398U disclose air conditioning apparatuses of a known type which provide to detect a distance between the air conditioner and a user. Moreover the utility model CN205825336U discloses by measuring the user body and indoor air temperature, and the distance between user and air conditioning apparatus, an intelligent control of the air conditioning compressor, wind speed and wind direction so to achieve an improved user's comfort and environmental protection.

One disadvantage of the known techniques, some examples of which are given above, is that they do not allow to eliminate the problem of a false recognition of a subject which could therefore cause an incorrect activation of the apparatus.

In the case of infrared sensors, for example, a false recognition can be caused by a flow of hot or cold air that misleads the thermal sensor, fast moving subjects such as pets, or also possible static situations of a subject which can be interpreted as false absences, and could therefore lead to an unwanted deactivation of the apparatus.

Another disadvantage is that if a subject approaches or moves away from the conditioning apparatus, in particular in the case of portable air conditioners, he must continuously modify and adapt the operating parameters according to the relative position, in order to maintain an acceptable level of comfort.

There is therefore a need to perfect a method for detecting a subject and a corresponding method for the adaptive control of an electric apparatus as a function of this detection, which can overcome at least one of the disadvantages of the state of the art.

In particular, one purpose of the present invention is to perfect a device and a method able to accurately detect the presence of a human subject, avoiding false signals.

Another purpose of the present invention is to provide a device for detecting a subject that is simple and inexpensive.

Another purpose is to provide a device and a method that allow to obtain a high energy efficiency of an electric apparatus, at the same time ensuring comfort for the user.

Another purpose of the present invention is to provide an electric apparatus that is provided with a detection device suitable to regulate the functioning thereof in a substantially automatic manner, in order to optimize both energy consumption and also the comfort provided to the subject.

Another purpose of the invention is to perfect a method for the adaptive control of an electric apparatus that allows to adapt the functioning of the electric apparatus in a simple and automatic manner in relation to the position of the subject, while maintaining the required comfort.

The Applicant has devised, tested and embodied the present invention to overcome the shortcomings of the state of the art and to obtain these and other purposes and advantages.

### SUMMARY OF THE INVENTION

The present invention is set forth and characterized in the independent claims 1 and 3. The dependent claims describe other characteristics of the present invention or variants to the main inventive idea.

In accordance with the above purposes, there is provided an electric apparatus suitable to modify at least one environmental characteristic of a space, and a method for the adaptive control of the electric apparatus, suitable to regulate its functioning on the basis of a method for detecting a subject by means of a simple and inexpensive detection device, which overcome the limits of the state of the art and eliminate the defects present therein.

By way of example, the electric apparatus can be an HVAC (Heating, Ventilation and Air Conditioning) apparatus, for example a fan, an air conditioner, a stove, a dehumidifier, of the portable type, generally referred to as a PCS (Personal Comfort System), or even of the static and fixed type, such as a heat pump, or even a traditional radiator.

The following description will mainly refer to electric apparatuses that comprise PCS-type HVAC apparatuses, normally used to regulate the microclimate inside buildings.

In particular, PCS-type HVAC apparatuses aim to create a comfort bubble around an occupant, that is the subject. That is, instead of controlling the microclimatic conditions in the entire volume of a room, as traditional air conditioning apparatuses normally do, they are designed to only control the conditions of a portion of air that is in the immediate vicinity of the subject. Traditional PCS-type apparatuses rely on the direct intervention of the individual, who can act on the heating power and/or speed of the fan, for changes in the operating set-up, and therefore for the customization of comfort conditions.

This intervention is required since the conditions of temperature and flow speed to which the subject is subjected vary greatly in relation to his/her distance from the PCS apparatus and therefore, if the subject frequently moves inside the space, it is necessary to intervene frequently on the conditioning parameters in order to maintain the desired conditions around the zone in which the subject is located.

With the terms "conditioning" and "condition" here and hereafter we generally mean the actions that are suitable to cool, heat, dehumidify or ventilate a space, or a combination thereof.

The device for detecting a subject according to the invention comprises an infrared detection means and a spatial detection means, respectively able to detect respective thermal and spatial data correlated to the presence and distance of the subject with respect to the device.

The detection device also comprises a processing board, with which the detection means are associated, configured to receive and process the thermal and spatial data detected by the detection means and determine the presence of a subject inside a space, or a detection zone, and also the distance of the subject from the device itself.

The detection device is associated with the electric apparatus and the processing board can be configured to control the functioning of the electric apparatus on the basis of the result of the processing performed.

According to the invention, the infrared detection means is provided with means for transmitting/receiving a signal both of the digital type and also of the analog type, in order to allow the detection of a subject both if it is static, and also if it is in motion.

The device for detecting the presence of a subject comprises a single passive type infrared detection means PIR (Passive InfraRed), and a single spatial detection means, preferably an ultrasonic sensor, thus resulting particularly simple and economical.

Some embodiments described here concern a method for detecting a subject inside a detection zone, which comprises:
- detecting the presence of the subject by means of the infrared detection means,
- detecting the distance of a subject by means of a spatial detection means,
- supplying signals on the presence and distance of the subject to a processing board,
- processing the signals supplied by the detection means.

According to one aspect of the invention, the step of detecting the presence provides to verify and monitor substantially continuously over time the presence of a subject inside a detection zone, whether it is static or in motion, so as to supply reliable signals on the real presence of the subject.

Some embodiments described here also concern a method for the adaptive control of an electric apparatus, which provides to detect the presence and distance of a subject with respect to the apparatus and to set and/or modify the functioning parameters of the electric apparatus on the basis of the presence and/or distance detected.

The electric apparatus is a conditioning or thermo-ventilation apparatus, and the control method provides to regulate at least one of either the temperature and/or the speed of a flow of conditioned air as a function of the distance from the subject.

According to other embodiments, if the presence of a subject is not detected, the method provides to shut down and/or temporarily deactivate one or more components of the electric apparatus, or possibly put the electric apparatus in an energy saving mode.

The method for the adaptive control of the electric apparatus provides to continue to monitor the detection zone even when the electric apparatus is in energy saving mode and, if the presence of a subject is detected, to once again activate the electric apparatus or one or more of its components.

The device and method for detecting subjects allow to accurately detect the presence and movement of a human body in such a way as to prevent both false recognitions that would erroneously activate the electric apparatus, and also false failed recognitions that would deactivate the electric apparatus in an unwanted manner.

The method for the adaptive control of the electric apparatus according to the invention, allows to regulate the electric apparatus continuously and substantially automatically, modifying its parameters and/or the operating set-up as a function of the position taken by the subject on each occasion, in such a way as to provide the subject with the desired climatic conditions around the area occupied, regardless of his distance from the electric apparatus.

In this way, it is possible to improve the energy efficiency of the electric apparatus by acting on two fronts.

A first front is linked to the fact that the electric apparatus always and only delivers the environmental performance equal to the "request", regardless of the relative position between subject and electric apparatus, without waste due to over-use of resources, while guaranteeing that these are not under-used, degrading comfort conditions.

A second front through which energy saving is carried out is linked to the continuous monitoring of the presence of occupants, which allows to put the electric apparatus in an energy-saving, suspended, or stand-by condition when the spaces are empty.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic lateral view of an internal space to be conditioned in which an electric apparatus is provided, in particular a conditioning apparatus in which there is applied a device for detecting a subject in accordance with embodiments described here;
- fig. 1a is an enlarged schematic view of a device for detecting a subject according to embodiments described here;
- fig. 2 is a schematic view of an internal space in which different operating areas of the electric apparatus according to embodiments described here have been highlighted;
- figs. 3a, 3b and 3c are schematic top views of an internal space that exemplify possible cases of detection of a subject;
- fig. 4 is a block diagram of a method for detecting a subject according to embodiments described here.

To facilitate comprehension, the same reference numbers have been used, where possible, to identify identical common elements in the drawings. It is understood that elements and characteristics of one embodiment can conveniently be incorporated into other embodiments as long as within the scope of the invention as defined in the claims.

### DETAILED DESCRIPTION OF SOME EMBODIMENTS

We will now refer in detail to the possible embodiments of the invention, of which one or more examples are shown in the attached drawings. Each example is supplied by way of illustration of the invention and shall not be understood as a limitation thereof. For example, one or more characteristics shown or described insomuch as they are part of one embodiment can be varied or adopted on, or in association with, other embodiments to produce another embodiment, as long as within the scope of the invention as defined in the claims.

According to the invention, a device 10 and a method are provided which allow to detect a subject S inside a space 11.

The electric apparatus 12 can comprise at least one functional component suitable to modify at least one environmental characteristic of a space 11.

By way of example, the electric apparatus 12 can be an HVAC (Heating, Ventilation and Air Conditioning) apparatus, for example a PCS portable fan heater, a fan, an air conditioner, a stove, a dehumidifier.

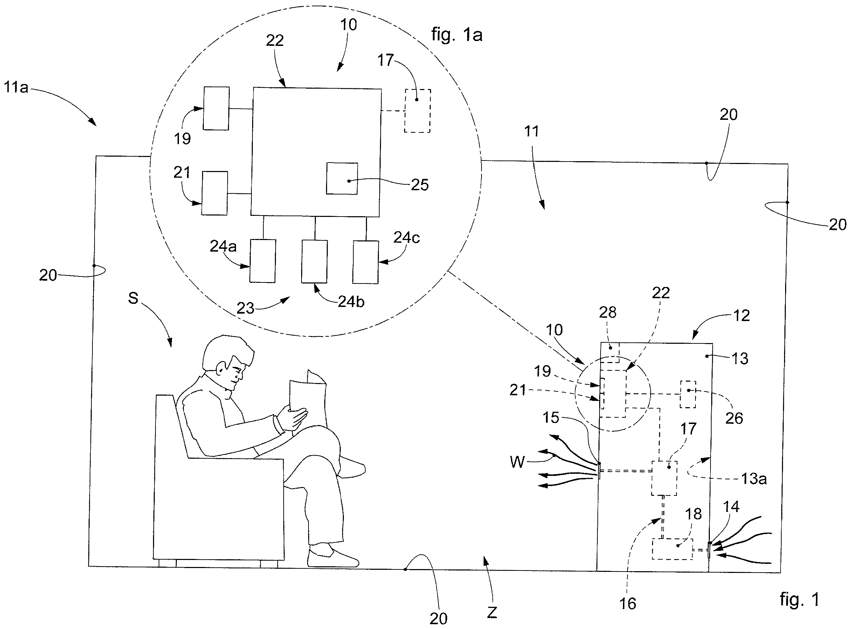

Some embodiments described here with reference to figs. 1 and 1a concern a device 10 for detecting a subject S inside a space 11 or detection zone Z.

In the example case, the device 10 is associated with an electric apparatus 12, in particular a portable conditioning apparatus 12a, suitable to regulate the climatic conditions inside a determinate area.

According to some embodiments, the detection device 10 comprises an infrared detection means 19 and a spatial detection means 21 respectively able to detect thermal and spatial data correlated to the presence and distance of the subject S with respect to the device 10, or to the electric apparatus 12 with which it is associated.

The detection device 10 also comprises a processing board 22, to which the detection means 19, 21 are associated and connected. The processing board 22 is configured to receive and process the data detected by the detection means 19, 21 and determine the presence of a subject S inside the detection zone Z and possibly, if present, also the distance of the subject S from the device 10.

The infrared detection means 19 is of the passive type (PIR).

The infrared detection means 19 is provided with means for receiving/transmitting a signal of the digital and analogue type in order to allow the detection of the subject S both if it is static, and also if it is in motion.

This solution allows to use a single infrared sensor 19 instead of a matrix of IR sensors to detect the presence and movement of a subject S, thus reducing costs and simplifying the construction of the detection device 10.

According to some embodiments, the spatial detection means 21 can be an ultrasonic sensor, configured to detect the distance between it and a subject S.

According to some embodiments, with the processing board 22 there can be associated signaling means 23 configured to provide information on the activation status of the detection device 10 itself and/or of the electric apparatus 12 on which it is applied.

The signaling means 23 can comprise lighting means, for example with LEDs 24a and 24b, which can emit a light signal when a person, that is, a subject S, is detected or on the basis of the functioning status parameters.

The signaling means 23 can also comprise a screen 24c, for example of the LCD type, or other display device, to display the status of the detection device 10, or any functioning parameters thereof, or possibly of the electric apparatus 12 to which it is applied.

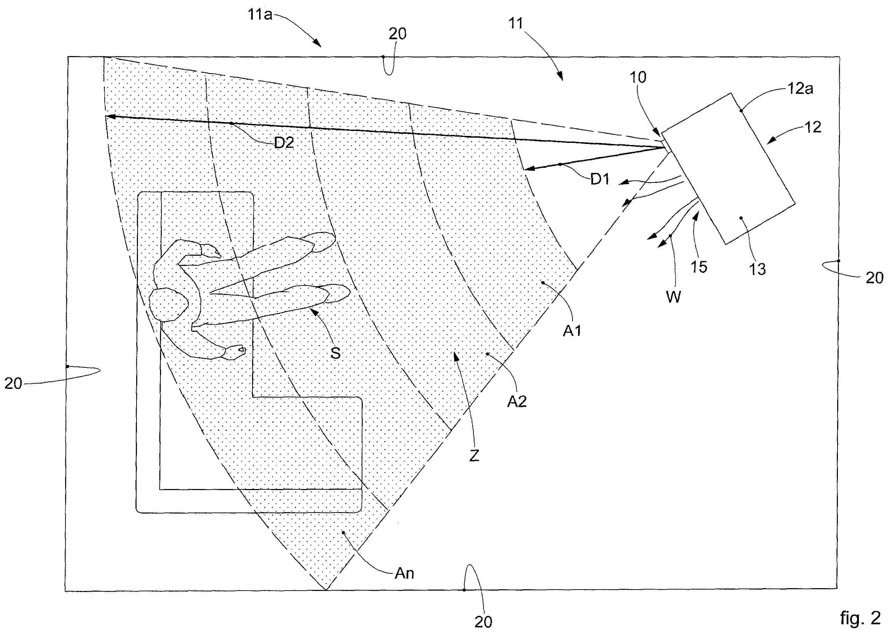

Optionally, there can be acoustic signaling means (not shown) suitable to provide a user with information on the functioning status of the device 10 and possibly of the electric apparatus 12, or even indications for a better use of the electric apparatus 12 in the event that a distance of the subject S is detected that is too small or too large with respect to the respective predefined minimum distance D1 and maximum distance D2 (fig. 2).

With reference to figs. 1 and from 3a to 3c, the conditioning apparatus 12a can be installed in an internal space 11, distinct from an external space 11a, and be able to condition its environmental parameters on each occasion.

The conditioning apparatus 12a can be configured to cool, dehumidify, heat or ventilate the internal space 11, or a combination of the above, in order to modify the thermal and/or hygrometric characteristics of the internal space 11.

The internal space 11 can be defined by a plurality of walls 20 along which doors and/or windows may be present.

According to the invention, a conditioning apparatus 12a comprises a conditioning body 13 defining a housing compartment 13a suitable to contain at least one functional component, which is a conditioning means 16 suitable to modify the state of an air flow W in order to cause a determinate effect in the surrounding space 11.

The device 10 for detecting a subject S is associated with the conditioning body 13, for example installed on a front portion thereof facing, during use, toward an area to be conditioned.

This conditioning body 13 may also comprise means 14 for drawing air and means 15 for delivering air.

According to the invention, the conditioning means 16 comprise at least one ventilation device 17, for example a fan, an impeller, or other device suitable to move and deliver an air flow, configured to cooperate with the delivery means 15 in order to deliver a conditioned air flow W.

In particular, the ventilation device 17 can be of the adjustable type and be configured to deliver air with different speeds and different flow rates.

The conditioning means 16 further comprise at least one conditioning device 18 capable of modifying the state of the air flow W in order to cause a determinate effect inside the internal space 11 in which it is emitted.

For example, the conditioning device 18 can cause a heating, a cooling, or a dehumidification of the air flow, or even a combination thereof in the case of a conditioning apparatus 12a designed to perform different functions according to requirements.

The conditioning apparatus 12a may also comprise a user interface 28 by means of which a user can command its functioning.

According to some embodiments, by means of the user interface 28 the user can set determinate temperature and/or humidity values, or can choose an automatic functioning mode for the conditioning apparatus 12a.

According to some embodiments, the user interface 28 can be integrated into the conditioning body 13, or be separated from it.

According to some embodiments, the conditioning apparatus 12a may comprise a control and command unit 26 configured to regulate the functioning of the conditioning means 16 in order to obtain a suitable conditioned air flow W as a function of a command received from the user and/or predefined settings.

According to some embodiments, the control and command unit 26 and the processing board 22 can be made as separate entities communicating with each other, or they can be integrated into a single component.

According to these embodiments, the device 10 can be directly associated and connected to one or more of the components of the electric apparatus 12, for example to the ventilation device 17.

In this case, it is the device 10, through the processing board 22, that directly modifies the functioning parameters of the electric apparatus 12.

According to other embodiments, the detection device 10 can be associated with the control and command unit 26 of the electric apparatus 12.

In this case, the device 10 can modify the functioning parameters of the electric apparatus 12, or of its components, by sending signals to the control and command unit 26.

The invention also provides a method for the adaptive control of an electric apparatus as defined in claim 3.

According to the invention, the method can provide to regulate its operating parameters to modify the characteristics of a conditioned air flow W by acting on the conditioning means 16 as a function of the position/distance of the subject S.

The parameters can be the air temperature, the rotation speed of the fan, the distance from the subject, the direction of the air flow and others, and these can be set by means of the user interface 28, or by selecting a predefined functioning mode in order to change at least one of either the temperature or humidity of a space.

The presence detection step provides to verify and monitor substantially continuously over time the presence of a subject S, whether static or in motion inside a space 11, in order to provide reliable signals on the real presence of the subject S.

According to some embodiments, the detection method provides to supply a signal of detection of the presence of the subject S if the infrared detection mean 19 detects the subject S continuously for a predetermined time.

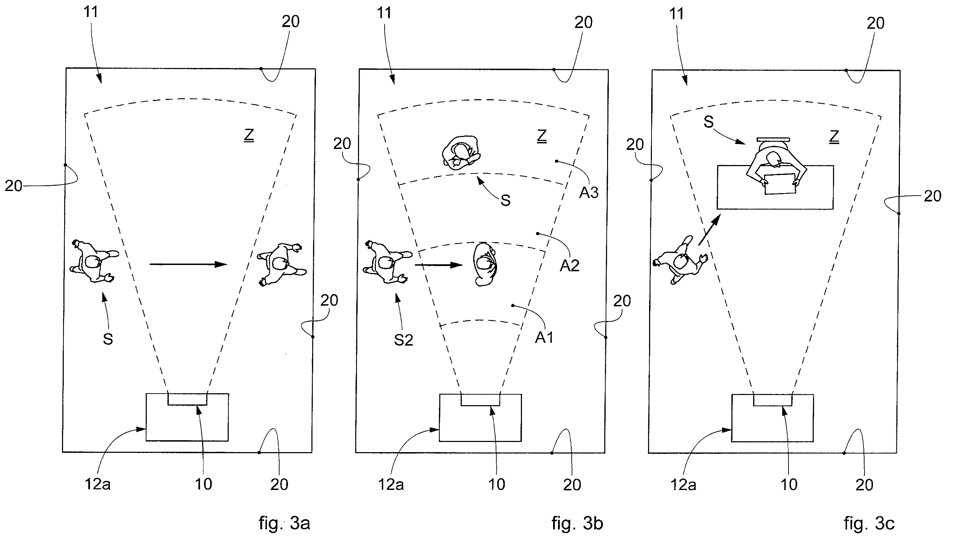

This allows to work around the problem of the generation of false signals, caused, for example, by subjects S passing through the detection zone Z without stopping there (see for example fig.3a), or by subjects S for which it is not appropriate to generate the signal, such as the passage of pets.

According to some embodiments, the distance detection step can be activated after the subject S has been continuously detected for a predetermined time.

According to possible variants, it can be provided that the distance detection step occurs continuously.

As a function of the detection of the presence and possibly of the distance of the subject S with respect to the detection device 10, the method provides to supply command signals suitable to command and regulate one or more electric apparatuses 12 associated with it.

Some embodiments can provide that, in the event that subjects S are not detected inside the space 11 or inside a detection zone Z, the electric apparatus 12 is set to an energy saving mode or sleeping mode.

In accordance with some embodiments, in the energy saving mode one or more functional components are disabled, for example, in the case of the conditioning apparatus 12a, the ventilation device 17 is stopped and the conditioning devices 18 for cooling/heating the air are shut down (if present).

In accordance with some embodiments, it can be provided that at least the detection of the presence of subjects S also functions in the energy saving mode.

The invention provides to measure the distance of the subject S from the device 10 when the presence of the subject S in the detection zone Z is verified.

According to some embodiments, the method provides to verify whether a variation in the distance of the subject S monitored, with respect to a previously detected distance, has occurred and possibly determine whether the new distance detected is stable or not.

Some embodiments can provide that the detection of the distance continues until the distance of the subject S is stable.

The distance can be considered stable when the subject S does not change its distance beyond a sensitivity range of the spatial detection mean 21 for a determinate time interval.

In this way, frequent changes in the operating parameters of the electric apparatus 12 are prevented, for example the rotation speed of the ventilation device 17 in cases in which a subject moves randomly in the detection zone Z or in the space 11.

This solution allows to save energy as well as to reduce continuous power surges in the electric apparatus 12 or in the conditioning apparatus 12a.

According to some embodiments, the value of the last distance detected on each occasion can be stored, for example, in a memory unit 25 connected to, or integrated in, the processing board 22, and the processing board 22 can determine a variation in the distance by comparing the last value detected with the previously stored one.

According to some embodiments, once it has been determined that the distance is stable, the method provides to modify the functioning parameters of the electric apparatus 12 or of at least one functional component thereof.

According to some embodiments, the processing board 22 can act on the functional component or components directly, for example the conditioning means 16, or act on them by means of the control unit 26.

For example, it can be provided that at least the ventilation device 17 has different functioning levels, that is, different rotation speeds, suitable to supply a more or less intense air flow W, and that the speed level is selected as a function of the distance of the subject S detected.

For example, with reference to fig. 2, there can be defined different activation areas or zones A1, A2...An, defined between a minimum distance D1 and a maximum distance D2 of operation of the conditioning apparatus 12a, and correlated to a number n of functioning speeds of the ventilation device 17.

As a function of the distance detected between the subject S and the detection device 10, it can be determined in which activation zone it is, and regulate the speed accordingly, keeping it to a minimum, for example, if the subject is in the closest activation zone A1, and increasing it progressively if it moves toward the furthest activation zone An.

Fig. 3b exemplifies the case in which a second subject S2 enters the detection zone Z and comes between an already present subject S and the conditioning apparatus 12a.

In this case, the device 10 detects the presence of the second subject S2 which has come between the conditioning apparatus 12a and the first subject S in the first activation zone A1, measures its distance and, in the case of a stable condition over time, regulates the functions of the conditioning apparatus 12a to the new conditions required to not cause discomfort to the second subject S2, which is in the nearest activation zone A1.

Thanks to the continuous detection of the presence of the subject S and therefore not only of its movement, moreover, there is prevented an unwanted activation of the energy saving mode in the event that the subject S assumes a static or semi-static position, such as for example shown in fig. 3c.

This solution is useful to prevent the shutdown of the conditioning apparatus 12a in cases where a subject is sat at a desk, sofa, armchair, bed or other similar, in a semi-static or static condition that would otherwise determine the unwanted shutdown of the conditioning apparatus 12a.

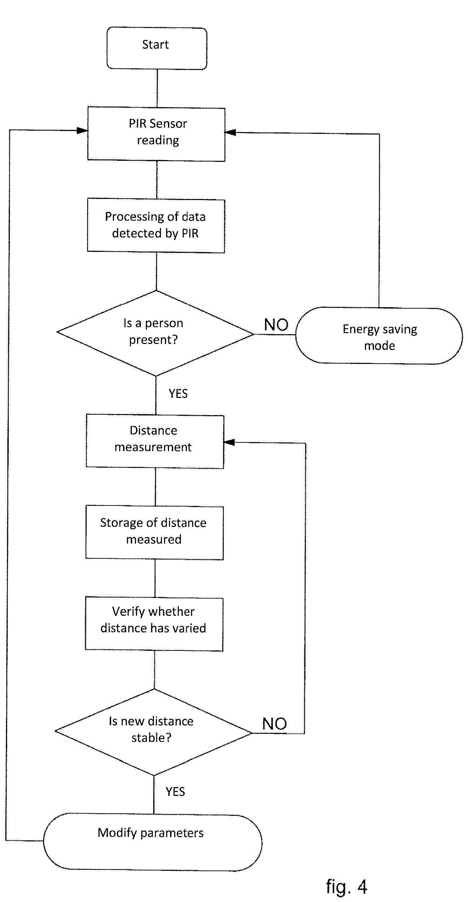

Fig. 4 shows a block diagram of a method for the adaptive control of an electric apparatus 12, such as a conditioning apparatus 12a.

When the conditioning apparatus 12a is switched on, all the constants and the libraries of the processing board 22 and/or of the control unit 26 can be initialized and an initial default distance can be set, for example an intermediate distance between the minimum D1 and maximum D2 operating distances of the conditioning apparatus 12a which, by way of example, can be about 2m, consequently activating the ventilation device 17 at the corresponding speed and possibly also the conditioning device 18 at the required thermal power.

Subsequently, the analysis of the infrared detection means 19 can be initialized, and a step of continuous monitoring of the distance between the subject S and the conditioning apparatus 12a, and of the presence of the subject S is started.

If the processing board 22 detects a variation in the distance greater than a preset threshold, it then enters a cycle, or loop, that is, it executes a cycle of instructions to verify that the new detected distance is stable over time.

If this distance does not vary for a pre-set period of time, then the new distance is considered stable and the ventilation device 17 and/or the conditioning device 18 are set accordingly.

The infrared detection means 19 continues to monitor the presence of the subject S and if no movement is detected for a predetermined period of time, then it is assumed that there are no people present in the detection zone Z, that is, in the space 11, and the conditioning apparatus 12a is set to energy saving mode, stopping the ventilation device 17.

During the energy saving mode, the infrared detection means 19 continues to monitor the presence of people and, if the presence of a subject S is detected again, the conditioning apparatus 12a is restarted, setting the functioning settings on the basis of the last distance measured before the activation of the power saving mode.

The invention therefore determines an improvement in comfort conditions since the microclimatic conditions around the subject S remain substantially constant as the distance of the subject S varies.

In addition, the continuous detection of the presence of subjects S in the detection area allows to prevent discomforting and unwanted starts or shutdowns of the electric apparatus 12.

In general, therefore, the invention makes the daily life of a subject S easier, since he can benefit from the functions of the electric apparatus 12 substantially without having to intervene on it.

It is clear that modifications and/or additions of parts or steps may be made to the device 10, to the conditioning apparatus 12a and to the method for the adaptive control of the electric apparatus as described heretofore, without departing from the field and scope of the present invention as defined by the claims.

It is also clear that, although the present invention has been described with reference to some specific examples, a person of skill in the art shall certainly be able to achieve many other equivalent forms of device 10 and method for the adaptive control, having the characteristics as set forth in the claims and hence all coming within the field of protection defined thereby.

## Claims

1. Electric air conditioning apparatus comprising a conditioning body (13) defining a housing compartment (13a),
at least one functional component (16, 17, 18) suitable to modify at least one environmental characteristic of an internal space (11), the functional component comprising conditioning means (16) provided with a ventilation device (17) and a conditioning device (18),
and at least one device (10) for detecting a subject (S), said device (10) being associated with said conditioning body (13) and comprising a continuous infrared detection means (19), and a spatial detection means (21) respectively configured to detect respective thermal and spatial data of said space (11) correlated to the presence of said subject (S) therein and to the distance of said subject (S) with respect to said device (10), **characterized in that** said infrared detection means (19) is of the PIR type consisting of a single passive type sensor, configured to detect said thermal data in a manner substantially continuous over time, and is provided with signal reception and transmission means of the digital and analogue type which are configured to detect the presence of said subject (S) both if it is static, and also if it is in motion, wherein said detection device (10) comprises a processing board (22) configured to receive and process said data detected by said detection means (19, 21) and determine the possible presence of said subject (S) and said distance and supply command signals suitable to command continuously and automatically the functioning of said electric apparatus and/or of said at least one functional component (16, 17, 18) on the basis of the processing carried out to regulate the temperature and the speed of a flow of conditioned air as a function of the distance of said subject (S) and to regulate said air conditioning apparatus modifying its parameters and/or the operating set-up as a function of the position taken by said subject (S), in such a way as to provide said subject (S) with desired climatic conditions around the area occupied by him, regardless of his distance from said air conditioning apparatus.

2. Apparatus as in claim 1, **characterized in that** said spatial detection means (21) is an ultrasonic sensor.

3. Method for the adaptive control of an electric air conditioning apparatus (12) as in claim 1 or 2, **characterized in that** it comprises:
- detecting by means of an infrared detection means (19) thermal data of said space (11) correlated to the presence of a subject (S) if it is in a static condition or in a condition of subsequent variation of position, wherein said method provides to detect said thermal data in a manner substantially continuous over time by means of an infrared detection mean (19) of the PIR type consisting of a single passive type sensor and provided with signal reception and transmission means of the digital and analogue type with analog/digital output in order to continuously verify the presence of the subject (S) whether it is static or in movement at least inside a detection zone (Z) of said space (11);
- detecting by means of a spatial detection means (21) spatial data correlated to the distance of said subject (S) from said electric apparatus (12);
- receiving and processing the thermal and spatial data detected by means of a processing board (22) to determine whether at least one subject (S) is present in said space (11) and at what distance it is located with respect to said electric apparatus;
- regulating continuously and automatically the functioning of said electric apparatus (12) and/or of said at least one functional component (16, 17, 18) as a function of the result of the processing carried out for regulating the temperature and the speed of a flow of conditioned air as a function of the distance of said subject (S) and modifying the parameters and/or the operating set-up of said electric apparatus (12) as a function of the position taken by said subject (S), in such a way as to provide said subject (S) with desired climatic conditions around the area occupied by him, regardless of his distance from said air conditioning apparatus.

4. Method as in claim 3, **characterized in that** the presence of the subject (S) is determined when said infrared detection mean (19) detects said subject (S) continuously for a predetermined time.

5. Method as in claim 3 or 4, **characterized in that** it provides to store on each occasion the last distance detected between said subject (S) and said electric apparatus (12) and to verify whether a variation between said last detected distance and a previously stored distance has occurred or not, and evaluate whether or how to regulate said at least one functional component (16, 17, 18) on the basis of said last detected distance.

6. Method as in claim 5, **characterized in that** before regulating said at least one functional component (16, 17, 18) it provides to verify if said last detected distance is stable, that is, it remains substantially unchanged for a predefined period of time.

7. Method as in any claim from 3 to 6, **characterized in that** if the absence of at least one subject (S) is determined, it provides to set said electric apparatus (12) to an energy saving mode or "sleep mode".

## Patentansprüche

1. Elektrisches Luftkonditionierungsgerät, umfassend:
einen Konditionierungskörper (13), der einen Aufnahmeraum (13a) definiert, mindestens eine funktionelle Komponente (16, 17, 18), die geeignet ist, mindestens eine Umgebungseigenschaft eines Innenraums (11) zu modifizieren, wobei die funktionelle Komponente Konditionierungsmittel (16), die mit einer Belüftungsvorrichtung (17) und einer Konditionierungsvorrichtung (18) versehen sind, und mindestens eine Vorrichtung (10) zur Detektion eines Subjekts (S) umfasst, wobei die Vorrichtung (10) mit dem Konditionierungskörper (13) verbunden ist und ein Mittel (19) zur kontinuierlichen Infrarotdetektion und ein Mittel (21) zur räumlichen Detektion umfasst, die jeweils so konfiguriert sind, dass sie thermische bzw. räumliche Daten des Raums (11) erfassen, die mit dem Vorhandensein des Subjekts (S) in dem Raum und mit der Entfernung des Subjekts (S) in Bezug auf die Vorrichtung (10) korreliert sind, **dadurch gekennzeichnet, dass** das Infrarotdetektionsmittel (19) vom PIR-Typ ist und aus einem einzigen passiven Sensor besteht, der so konfiguriert ist, dass er die thermischen Daten in einer im Wesentlichen kontinuierlichen Weise über die Zeit erfasst, und mit digitalen und analogen Signalempfangs- und - übertragungsmitteln versehen ist, die so konfiguriert sind, dass sie die Anwesenheit des Subjekts (S) sowohl in einem statischen Zustand als auch in einem Bewegungszustand erfassen, wobei die Detektionsvorrichtung (10) eine Verarbeitungskarte (22) umfasst, die so konfiguriert ist, dass sie die von den Detektionsmitteln (19, 21) erfassten Daten empfängt und verarbeitet und die mögliche Anwesenheit des Subjekts (S) und die Entfernung bestimmt und Steuersignale liefert, die geeignet sind, die Funktionsweise des elektrischen Geräts und/oder der mindestens einen funktionelle Komponente (16, 17, 18) auf der Grundlage der durchgeführten Verarbeitung zu steuern, um die Temperatur und die Geschwindigkeit eines Stroms konditionierter Luft in Abhängigkeit von der Entfernung des Subjekts (S) zu regeln, und das Luftkonditionierungsgerät zu regeln, indem es seine Parameter und/oder die Betriebseinstellung in Abhängigkeit von der von dem Subjekt (S) eingenommenen Position so verändert, dass das Subjekt (S) unabhängig von seiner Entfernung von dem Luftkonditionierungsgerät die gewünschten klimatischen Bedingungen in dem von ihm eingenommenen Bereich vorfindet.

2. Vorrichtung nach Anspruch 1, **dadurch gekennzeichnet, dass** das Mittel (21) zur räumliche Erfassung ein Ultraschallsensor ist.

3. Verfahren zur adaptiven Steuerung eines elektrischen Luftkonditionierungsgeräts (12) gemäß Anspruch 1 oder 2, **dadurch gekennzeichnet, dass** es umfasst:
- Erfassen, mittels eines Infrarot-Detektionsmittels (19), von thermischen Daten des Raums (11), die mit der Anwesenheit eines Subjekts (S) korreliert sind, ob es sich in einem statischen Zustand oder in einem Zustand mit anschließender Positionsveränderung befindet, wobei in dem Verfahren die thermischen Daten in einer im Wesentlichen kontinuierlichen Weise über die Zeit mittels eines Infrarot-Detektionsmittels (19) vom PIR-Typ, das aus einem einzigen passiven Sensor besteht und mit digitalen und analogen Signalempfangs- und -übertragungsmitteln mit Analog/Digital-Ausgabe versehen ist, erfasst werden, um die Anwesenheit des Subjekts (S), ob im statischen oder im Bewegungszustand, zumindest in einer Erfassungszone (Z) des Raums (11) zu bestätigen;
- Erfassen, mittels eines Mittels (21) zur räumlichen Detektion, von räumlichen Daten, die mit der Entfernung des Subjekts (S) von dem elektrischen Gerät (12) korreliert sind;
- Empfangen und Verarbeiten der erfassten thermischen und räumlichen Daten mittels einer Verarbeitungskarte (22), um zu bestimmen, ob mindestens ein Subjekt (S) in dem Raum (11) vorhanden ist und in welcher Entfernung es sich in Bezug auf das elektrische Gerät befindet;
- kontinuierliches und automatisches Regeln der Funktionsweise des elektrischen Geräts (12) und/oder der mindestens einen funktionellen Komponente (16, 17, 18) in Abhängigkeit vom Ergebnis der durchgeführten Verarbeitung zur Regelung der Temperatur und der Geschwindigkeit eines Stroms konditionierter Luft in Abhängigkeit von der Entfernung des Subjekts (S) und Modifizieren der Parameter und/oder der Betriebseinstellung des elektrischen Geräts (12) in Abhängigkeit von der von dem Subjekt (S) eingenommenen Position derart, dass das Subjekt (S) unabhängig von seiner Entfernung zu dem Luftkonditionierungsgerät die gewünschten klimatischen Bedingungen in dem von ihm eingenommenen Bereich vorfindet.

4. Verfahren nach Anspruch 3, **dadurch gekennzeichnet, dass** die Anwesenheit des Subjekts (S) festgestellt wird, wenn das Infrarot-Detektionsmittel (19) das Subjekt (S) kontinuierlich für eine vorbestimmte Zeit erfasst.

5. Verfahren nach Anspruch 3 oder 4, **dadurch gekennzeichnet, dass** es vorsieht, jedes Mal die zuletzt erfasste Entfernung zwischen dem Subjekt (S) und dem elektrischen Gerät (12) zu speichern und zu überprüfen, ob eine Abweichung zwischen der zuletzt erfassten Entfernung und einer zuvor gespeicherten Entfernung aufgetreten ist oder nicht, und zu bewerten, ob oder wie die mindestens eine funktionelle Komponente (16, 17, 18) auf der Grundlage der zuletzt erfassten Entfernung zu regeln ist.

6. Verfahren nach Anspruch 5, **dadurch gekennzeichnet, dass** vor der Regelung der mindestens einen funktionellen Komponente (16, 17, 18) überprüft wird, ob die zuletzt erfasste Entfernung stabil ist, das heißt für eine vordefinierte Zeitspanne im Wesentlichen unverändert bleibt.

7. Verfahren nach einem der Ansprüche 3 bis 6, **dadurch gekennzeichnet, dass** es, wenn die Abwesenheit mindestens eines Subjekts (S) festgestellt wird, dafür sorgt, dass das elektrische Gerät (12) in einen Energiesparmodus oder "Schlafmodus" versetzt wird.

## Revendications

1. Appareil de climatisation électrique comprenant un corps de conditionnement (13) définissant un compartiment de boîtier (13a), au moins un composant fonctionnel (16, 17, 18) apte à modifier au moins une caractéristique environnementale d'un espace interne (11), le composant fonctionnel comprenant des moyens de conditionnement (16) munis d'un dispositif de ventilation (17) et d'un dispositif de conditionnement (18), et au moins un dispositif (10) de détection d'un sujet (S), ledit dispositif (10) étant associé audit corps de climatisation (13) et comprenant des moyens de détection infrarouge continue (19), et des moyens de détection spatiale (21) configurés respectivement pour détecter des données thermiques et spatiales respectives dudit espace (11) corrélées à la présence dudit sujet (S) dans celui-ci et à la distance dudit sujet (S) par rapport audit dispositif (10), **caractérisé en ce que** lesdits moyens de détection infrarouge (19) sont du type PIR consistant en un capteur de type passif unique, configuré pour détecter lesdites données thermiques d'une manière sensiblement continue dans le temps, et est pourvu de moyens de réception et de transmission de signal du type numérique et analogique qui sont configurés pour détecter la présence dudit sujet (S) à la fois s'il est statique, et aussi s'il est en mouvement, dans lequel ledit dispositif de détection (10) comprend une carte de traitement (22) configurée pour recevoir et traiter lesdites données détectées par lesdits moyens de détection (19, 21) et déterminer la présence possible dudit sujet (S) et ladite distance, et fournir des signaux de commande appropriés pour commander en continu et automatiquement le fonctionnement dudit appareil électrique et/ou dudit au moins un composant fonctionnel (16, 17, 18) sur la base du traitement effectué pour réguler la température et la vitesse d'un flux d'air conditionné en fonction de la distance dudit sujet (S) et pour réguler ledit appareil de climatisation en modifiant ses paramètres et/ou le réglage de fonctionnement en fonction de la position prise par ledit sujet (S), de manière à fournir audit sujet (S) des conditions climatiques souhaitées autour de la zone qu'il occupe, quelle que soit sa distance par rapport audit appareil de climatisation.

2. Appareil selon la revendication 1, **caractérisé en ce que** lesdits moyens de détection spatiale (21) sont un capteur à ultrasons.

3. Procédé de commande adaptative d'un appareil de climatisation électrique (12) selon la revendication 1 ou 2, **caractérisé en ce qu'**il comprend les étapes consistant à :
- détecter par l'intermédiaire de moyens de détection infrarouge (19) des données thermiques dudit espace (11) corrélées à la présence d'un sujet (S), qu'il soit dans un état statique ou dans un état de variation de position ultérieure, dans lequel ledit procédé prévoit de détecter lesdites données thermiques d'une manière sensiblement continue dans le temps par l'intermédiaire de moyens de détection infrarouge (19) de type PIR consistant en un capteur de type passif unique et pourvu de moyens de réception et de transmission de signal de type numérique et analogique à sortie analogique/numérique afin de vérifier en continu la présence du sujet (S), qu'il soit statique ou en mouvement au moins à l'intérieur d'une zone de détection (Z) dudit espace (11) ;
- détecter par l'intermédiaire de moyens de détection spatiale (21) des données spatiales corrélées à la distance entre ledit sujet (S) et ledit appareil électrique (12) ;
- recevoir et traiter les données thermiques et spatiales détectées par l'intermédiaire d'une carte de traitement (22) pour déterminer si au moins un sujet (S) est présent dans ledit espace (11) et à quelle distance il est situé par rapport audit appareil électrique ;
- réguler en continu et automatiquement le fonctionnement dudit appareil électrique (12) et/ou dudit au moins un composant fonctionnel (16, 17, 18) en fonction du résultat du traitement effectué pour réguler la température et la vitesse d'un flux d'air conditionné en fonction de la distance dudit sujet (S), et modifier les paramètres et/ou le réglage de fonctionnement dudit appareil électrique (12) en fonction de la position prise par ledit sujet (S), de manière à fournir audit sujet (S) des conditions climatiques souhaitées autour de la zone occupée par celui-ci, quelle que soit sa distance par rapport audit appareil de climatisation.

4. Procédé selon la revendication 3, **caractérisé en ce que** la présence du sujet (S) est déterminée lorsque lesdits moyens de détection infrarouge (19) détectent ledit sujet (S) en continu pendant une durée prédéterminée.

5. Procédé selon la revendication 3 ou 4, **caractérisé en ce qu'**il prévoit de stocker à chaque fois la dernière distance détectée entre ledit sujet (S) et ledit appareil électrique (12), et de vérifier si une variation entre ladite dernière distance détectée et une distance précédemment stockée est survenue ou non, et d'évaluer si ou comment réguler ledit au moins un composant fonctionnel (16, 17, 18) sur la base de ladite dernière distance détectée.

6. Procédé selon la revendication 5, **caractérisé en ce qu'**avant de réguler ledit au moins un composant fonctionnel (16, 17, 18), il prévoit de vérifier si ladite dernière distance détectée est stable, c'est-à-dire qu'elle reste sensiblement inchangée pendant une période de temps prédéfinie.

7. Procédé selon l'une quelconque des revendications 3 à 6, **caractérisé en ce que** si l'absence d'au moins un sujet (S) est déterminée, il prévoit de régler ledit appareil électrique (12) sur un mode d'économie d'énergie ou "mode de veille".
